# FASCICULE DE BREVET EUROPEEN

(11) **EP 4 296 475 B1**
(45) Date de publication et mention de la délivrance du brevet: **22.04.2026**
(21) Numéro de dépôt: 22315127.5
(22) Date de dépôt: 24.06.2022
(51) Int. Cl.: F01M 11/00, F01D 25/18, F02C 7/06

(54) **RESERVOIR D'HUILE AVEC COMPARTIMENT INFÉRIEUR AYANT UN CONDUIT DE DEPART D'HUILE COMPATIBLE G NÉGATIF**
ÖLTANK MIT UNTEREM FACH MIT EINEM NEGATIV-G-KOMPATIBLEN ÖL-AUSTRITTSKANAL
OIL TANK WITH LOWER COMPARTMENT HAVING NEGATIVE G COMPATIBLE OIL-DISCHARGING CONDUIT

(43) Date de publication de la demande: 27.12.2023
(73) Titulaire: Safran Aero Boosters, 4041 Herstal (BE); Safran Aircraft Engines, 75015 Paris (FR)
(72) Inventeur: BOUGELET, Stephane Alain Luc Ghislain, Herstal (BE); BORLON, Quentin, Herstal (BE); ORIOL, Sébastien, Melun (FR)
(74) Mandataire: Ipsilon Luxembourg

(56) Documents cités:
- EP-A1- 1 104 742
- EP-A2- 2 166 196
- FR-A1- 3 010 133
- FR-A1- 3 105 296
- FR-A1- 3 107 319

## Description

### Domaine

L'invention se rapporte au domaine des réservoirs de turbomachine. Plus précisément, l'invention se rapporte au domaine des réservoirs d'huile utilisés pour lubrifier des composants de turbomachine, notamment comprenant une hélice non carénée à pas variable et/ou un redresseur à pas variable.

### Art antérieur

Des turbomachines d'aéronef comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour Unducted Single Fan).

Ces turbomachines sont des turbopropulseurs qui se distinguent des turboréacteurs par l'utilisation d'une hélice à l'extérieur de la nacelle (non carénée) au lieu d'une soufflante interne.

L'hélice ou les hélices formant la partie propulsive comprennent généralement un système d'actionnement du pas des aubes de(s) l'hélice(s), également désigné par système à calage variable. Un tel système permet aux aubes de l'hélice de s'orienter selon le besoin et phases de vol de l'aéronef (décollage, croisière, atterrissage, etc.) afin d'assurer une gestion de la direction de la poussée dans tous les cas de vol de la turbomachine.

Dans le cas des turbomachines avec une seule hélice non carénée et un redresseur, ce dernier peut aussi comprendre un système à calage variable de manière à améliorer les performances de la turbomachine, notamment d'un point de vue aérodynamique. Un exemple d'une telle turbomachine est divulgué par le document de brevet publié FR 3 107 319 A1.

Les systèmes à calage variables peuvent nécessiter une alimentation permanente en huile afin de permettre l'actionnement du pas des aubes et la gestion de la poussée du moteur dans tous les cas de vol de la turbomachine (nominaux et extrêmes). Dans l'état de l'art, ces systèmes sont alimentés par un circuit de lubrification principal permettant d'assurer une alimentation en huile des différents composants du moteur (paliers, réducteur, etc.) afin d'assurer des fonctions de lubrification et/ou de refroidissement. Ce circuit est alimenté en huile par un réservoir principal de la turbomachine comprenant entre autres une entrée d'huile en partie supérieure et une sortie en partie inférieure, suivant une direction de montage verticale, ce qui permet une alimentation en huile lors des attitudes de vol sous pesanteur ou facteur de charge positif (G positif).

Si de tels réservoirs donnent entière satisfaction lorsque l'aéronef effectue des vols dans des cas de vol en G positif, en revanche, lorsqu'il s'agit de phases de vol sous facteur de charge nul ou négatif (G nul ou G négatif), i.e., en cas de manœuvre de l'aéronef ou en cas de bourrasque de vent ascendante, ces réservoirs n'assurent plus complétement l'alimentation en huile du système d'actionnement du pas.

En effet, les phases de vol en G nul ou G négatif sont des phases de vol temporaires (durent généralement moins de 30 secondes pour les avions civils) pour lesquelles l'aéronef est soumis à des accélérations négatives, par exemple, lorsqu'il subit de brusques changements de niveaux verticaux.

A cet effet, l'huile contenue dans le réservoir principal est alors renversée, l'huile ne se situe plus aux abords de la sortie en partie inférieure, ce qui génère une coupure dans l'alimentation en huile, entrainant un passage d'air vers le(s) circuit(s) à calage variable, engendrant ainsi des conséquences nuisibles sur le fonctionnement de la turbomachine.

Il est possible d'utiliser des réservoirs tels que ceux qui équipent des avions de chasse, où les phases de vol en G négatif sont fréquentes et indispensables. Cependant, ces réservoirs sont pressurisés, ce qui implique un surpoids important, ainsi qu'un surcoût élevé, incompatible avec les turbomachines comprenant au moins une hélice non carénée.

Par ailleurs, une solution connue permettant d'éviter de nuire au circuit d'actionnement du pas des hélices consiste en cas de G négatif, d'assurer l'alimentation en huile au moyen d'un autre système que le réservoir d'huile principal de la turbomachine. Toutefois, une telle solution implique un encombrement et une masse importants au sein de la turbomachine et une gestion complexe de l'acheminement de l'huile vers le système à calage variable.

Le document de brevet publié FR 3 010 133 A1 divulgue un réservoir comprenant une cloison inclinée munie à ses extrémités d'orifices traversants pour une alimentation continue de la turbomachine.

Le document EP 1 104 742 A1 divulgue un réservoir de turbomachine avec une cloison entre un compartiment supérieur et un compartiment inférieur. Ce réservoir possède une petite ouverture entre le rebord de la cloison et une paroi latérale, ladite ouverture s'étendant jusqu'au fond et située sous le conduit de sortie, formant ainsi un bac qui maintient le conduit immergé dans l'huile lorsque le réservoir est renversé.

Cependant, les solutions proposées par les documents de l'art antérieur présentent une marge d'amélioration afin de permettre, par exemple, un plus grand volume d'huile disponible pour alimenter les composants de la turbomachine en cas de vol en G négatif, sans entraver ledit volume lors du retour en G positif.

### Résumé de l'invention

### Problème technique

La présente invention a pour objectif de pallier au moins un des inconvénients de l'état de la technique susmentionné. Plus particulièrement, l'invention a pour objectif de proposer un réservoir d'huile dont la conception est telle qu'elle permet à l'aéronef d'effectuer, en toute sécurité, des phases temporaires de vol en pesanteur négative, sans augmenter le poids et le coût du réservoir.

### Solution technique

L'invention a trait à un réservoir d'huile pour turbomachine, comprenant :
- une enceinte pour l'huile, présentant un axe principal, et avec des parois délimitant un compartiment inférieur et un compartiment supérieur séparé du compartiment inférieur par une paroi de séparation ;
- un canal s'étendant dans le compartiment inférieur, depuis la paroi de séparation, ledit canal comprenant une sortie d'huile débouchant dans le compartiment inférieur ;
- une arrivée d'huile vers le compartiment supérieur ;
- un départ d'huile depuis le compartiment inférieur, comprenant un conduit s'étendant dans le compartiment inférieur et comprenant une entrée d'huile dans le compartiment inférieur ; remarquable en ce que la paroi de séparation présente une forme conique, et la sortie d'huile du canal est davantage éloignée du compartiment supérieur comparé à l'entrée d'huile du conduit, suivant l'axe principal, de manière à conserver une alimentation en huile du conduit lors des phases de vol en pesanteur nulle ou négative.

Avantageusement, la sortie d'huile du canal est à une position inférieure à l'entrée d'huile du conduit, suivant l'axe principal.

Selon un mode avantageux de l'invention, le canal s'étend depuis la paroi de séparation jusqu'à la sortie d'huile suivant l'axe principal sans inversion de sens par rapport audit axe principal.

Selon un mode avantageux de l'invention, le départ d'huile et le conduit sont sur une des parois de l'enceinte formant le compartiment inférieur.

Selon un mode avantageux de l'invention, la paroi de l'enceinte est une paroi inférieure, le conduit et le canal s'étendant suivant l'axe principal ou avec une inclinaison avec ledit axe principal inférieure à 20°.

Selon un mode avantageux de l'invention, le compartiment inférieur délimite, suivant l'axe principal, un premier volume d'huile entre la sortie d'huile du canal et la paroi de séparation, et un deuxième volume d'huile entre l'entrée d'huile du conduit et le départ d'huile, ledit deuxième volume étant plus petit que le premier volume.

Selon un mode avantageux de l'invention, la paroi de séparation définit une hauteur avec la paroi inférieure, et le canal comprend une longueur égale à au moins 80% de la hauteur du compartiment inférieur.

Selon un mode avantageux de l'invention, le conduit présente un recouvrement avec le canal, ledit recouvrement étant égal à au plus 50% de la longueur du canal.

Selon un mode avantageux de l'invention, la paroi de séparation et/ou la sortie d'huile du canal comprend, en outre, au moins une vanne et/ou au moins un clapet anti-retour sensible(nt) aux changements de la pesanteur.

L'invention a également trait à un réservoir d'huile pour turbomachine, comprenant :
- une enceinte pour l'huile, présentant un axe principal, et avec des parois délimitant un compartiment inférieur et un compartiment supérieur séparé du compartiment inférieur par une paroi de séparation ;
- un canal s'étendant dans le compartiment inférieur, depuis la paroi de séparation, ledit canal comprenant une sortie d'huile débouchant dans le compartiment inférieur ;
- une arrivée d'huile vers le compartiment supérieur ;
- un départ d'huile depuis le compartiment inférieur, comprenant un conduit s'étendant dans le compartiment inférieur et comprenant une entrée d'huile dans le compartiment inférieur ; remarquable en ce que la sortie d'huile du canal est davantage éloignée du compartiment supérieur comparé à l'entrée d'huile du conduit, suivant l'axe principal, de manière à conserver une alimentation en huile du conduit lors des phases de vol en pesanteur nulle ou négative, et en ce que le conduit est agencé au droit d'une paroi latérale du compartiment inférieur, ledit conduit étant coudé et comprenant une partie distale apte à se déplacer dans le compartiment inférieur entre une première position dans laquelle l'entrée d'huile de la partie distale étant proche de la paroi inférieure, et une deuxième position dans laquelle l'entrée d'huile est proche de la paroi de séparation.

Selon un mode avantageux de l'invention, la partie distale du conduit coudé est sensible aux changements de la pesanteur.

Selon un mode avantageux de l'invention, l'entrée d'huile du conduit est latéralement distante du canal d'une distance correspondant à au plus 30% d'une largeur totale du compartiment inférieur.

L'invention a également trait à une turbomachine comprenant :
- une hélice non carénée propulsant un flux d'air entrant, ladite hélice comprenant un système à calage variable permettant d'actionner le pas des aubes de l'hélice ;
- un réservoir d'huile pour la lubrification de composants de la turbomachine ; remarquable en ce que ledit réservoir est selon l'un des modes avantageux de l'invention susmentionnés.

Selon un mode avantageux de l'invention, l'arrivée d'huile mélangée à de l'air, disposée sur le compartiment supérieur et une sortie d'huile supérieure forment avec le compartiment supérieur un premier circuit fermé destiné à la lubrification et/ou au refroidissement des composants du moteur de la turbomachine.

Selon un mode avantageux de l'invention, le système à calage variable est un premier système à calage variable, et ladite turbomachine comprend, en outre, un redresseur comprenant une pluralité d'aubes statoriques s'étendant depuis un carter fixe, ledit redresseur comprenant un deuxième système à calage variable, et en ce que le départ d'huile est hydrauliquement relié à un deuxième circuit fermé comprenant des composants du premier système et/ou du deuxième système à calage variable de la turbomachine.

### Avantages de l'invention

L'invention est particulièrement avantageuse en ce qu'elle permet de garantir une alimentation en huile des différents composants de la turbomachine, dont notamment le(s) système(s) à calage variable, et cela tout en assurant que ce(s) dernier(s) soi(en)t alimenté(s) en huile pure sans aucune présence d'air et sans interruption d'alimentation lors des phases de vol en gravité nulle et en gravité négative. Ainsi, la commande hydraulique du système d'actionnement du pas de l'hélice de la turbomachine peut rester opérationnelle lors de toutes les phases de vol de l'aéronef. Avantageusement, la simplicité de l'architecture du réservoir d'huile de la présente invention lui permet d'assurer un fonctionnement fiable. De plus, le réservoir est compact, ce qui permet de réduire l'encombrement global et la masse de la turbomachine.

### Description des dessins

[Fig 1] est une vue schématique en coupe axiale d'une turbomachine d'aéronef selon l'invention ;
[Fig 2] est d'un schéma des différents circuits fermés reliés au réservoir d'huile de l'invention ;
[Fig 3] représente une vue en coupe d'un réservoir d'huile non revendiqué
[Fig 4] illustre une variante du réservoir de la figure 3 selon un premier mode de réalisation de l'invention
[Fig 5] représente une vue en coupe du réservoir d'huile de la figure 3 lors d'une phase de vol de l'aéronef en pesanteur positive ;
[Fig 6] représente une vue en coupe du réservoir d'huile de la figure 3 lors d'une phase de vol de l'aéronef en pesanteur négative ;
[Fig 7] représente une vue en coupe d'un réservoir d'huile selon un deuxième mode de réalisation de l'invention ;
[Fig 8] représente une vue en coupe du réservoir d'huile de la figure 7 lors d'une phase de vol de l'aéronef en pesanteur positive ;
[Fig 9] représente une vue en coupe du réservoir d'huile de la figure 7 lors d'une phase de vol de l'aéronef en pesanteur négative.

### Description détaillée

Les figures montrent les éléments de manière schématique et ne sont pas représentées à l'échelle. En particulier, certaines dimensions sont agrandies pour faciliter la lecture des figures.

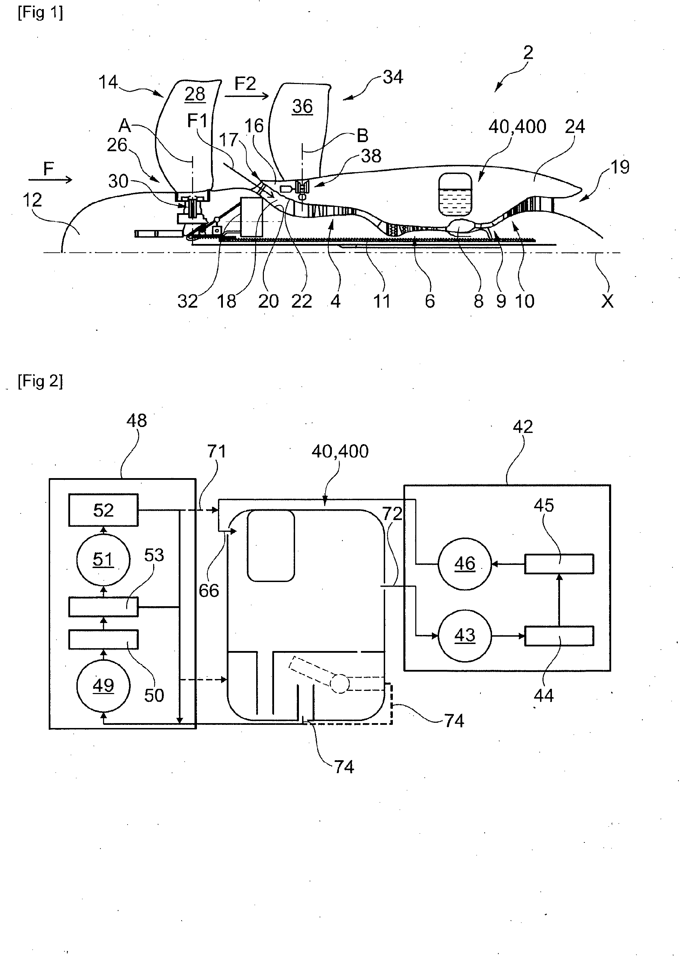

La figure 1 illustre schématiquement une vue en coupe axiale d'une turbomachine d'aéronef selon l'invention. Il s'agit d'une turbomachine connue sous l'expression anglaise « open rotor » ou « unducted fan », et particulièrement d'une turbomachine USF « Unducted Single Fan ».

Dans la description qui va suivre, les termes « interne » et « externe » renvoient à un positionnement par rapport à l'axe de rotation d'une turbomachine, et ici suivant l'axe longitudinal X (et même de gauche à droite sur la figure 1. Les termes « radial », « interne » et « externe » sont définis par rapport à une direction radiale perpendiculaire à l'axe longitudinal X. L'amont et l'aval sont en référence au sens d'écoulement d'un flux dans la turbomachine. Par ailleurs, les éléments illustrés dans les figures qui sont identiques ou sensiblement identiques et/ou avec les mêmes fonctions sont représentés par les mêmes références numériques.

La turbomachine 2 comprend typiquement d'amont en aval, un premier niveau de compression, dit compresseur basse pression 4, ainsi qu'un deuxième niveau de compression, dit compresseur haute pression 6, une chambre de combustion 8 suivie d'une turbine basse pression 9 et d'une turbine haute pression 10.

La turbomachine 2 comprend une hélice 14 agencée en amont d'un bec de séparation 16 porté par un carter externe 24 et apte à séparer le flux d'air F en un flux secondaire F2 et un flux primaire F1 circulant dans une veine primaire 18 et traversant les différents niveaux susmentionnés de la turbomachine 2.

La veine primaire 18 est délimitée radialement par une paroi radialement interne 20 et une paroi radialement externe 22. La paroi radialement interne 20 est portée par le carter interne 12. La paroi radialement externe 22 est portée par le carter externe 24. Le flux d'air primaire F1 entre dans la veine primaire 18 par une entrée d'air annulaire 17 et s'en échappe par une tuyère primaire 19 qui est disposée en aval de ladite veine primaire 18. Le flux primaire F1 peut être accéléré par la tuyère primaire 19 de sorte à générer une réaction de poussée nécessaire au vol de l'aéronef.

La turbomachine comprend un carter rotatif 26 centré sur l'axe longitudinal X et tournant autour de ce dernier. Le carter rotatif 26 porte une couronne de pales 28 mobiles formant l'hélice 14. Le carter rotatif 26 est monté mobile par rapport au carter interne 12 qui le porte.

Le flux d'air F qui entre dans la turbomachine traverse les pales 28 de l'hélice 14 pour former le flux d'air secondaire F2. Ce dernier circule autour du carter externe 24. Chaque pale 28 de l'hélice 14 comprend un pied 30 et une partie aérodynamique s'étendant radialement vers l'extérieur depuis le pied 30, ce dernier comprenant un pivot. En effet, le pied 30 est monté pivotant autour d'un axe A (perpendiculaire à X) permettant ainsi le pivotement des pales 28 de l'hélice 14. Ce pivotement est géré par un premier système à calage variable de la turbomachine 2.

Le compresseur basse pression 4 et la turbine basse pression 10 sont reliés mécaniquement par un arbre basse pression 11, ce dernier entraîne l'hélice 14 par l'intermédiaire d'un réducteur 32, l'hélice 14 comprime l'air à l'extérieur du carter externe 24 et fournit la majeure partie de la poussée de la turbomachine 2. Le réducteur 32 peut être de type à train planétaire.

La turbomachine 2 comprend un redresseur 34 traversé par le flux secondaire F2, ce dernier étant une partie du flux d'air F propulsée radialement extérieurement à l'axe longitudinal X. Le redresseur 34 comprend une pluralités d'aubes de stator 36 (ou aubes statoriques ou aubes fixes) connues sous l'acronyme anglais «OGV» (Outlet Guide Vane). Les aubes de stator 36 sont réparties régulièrement autour de l'axe longitudinal X et s'étendent radialement dans le flux d'air secondaire F2. Les aubes de stator 36 sont portées par une structure fixe solidaire du carter externe 24. En particulier, chaque aube de stator 36 s'étend radialement depuis un pied 38, ce dernier est monté pivotant autour d'un axe B (perpendiculaire à X) permettant le pivotement des aubes statoriques 36 du redresseur 34. Ce pivotent est géré par un deuxième système à calage variable de la turbomachine 2.

La turbomachine 2 comprend, en outre, un réservoir d'huile 40, 400 pour la lubrification et/ou le refroidissement des composants de ladite turbomachine 2. A cet effet, le réservoir d'huile 40, 400 est le réservoir d'huile principal de la turbomachine 2, et permet en outre, d'alimenter en huile les premier et deuxième systèmes à calage variable de la turbomachine 2. De préférence, le réservoir 40, 400 est agencé au droit du carter externe 24. L'architecture et le fonctionnement du réservoir d'huile 40, 400 seront détaillés plus loin dans la présente description.

Avantageusement, il existe une connexion 71 entre le circuit de commande hydraulique 48 et le circuit de lubrification 42 pour récolter des éventuelles fuites des vérins d'actuation des pas d'hélice et de réinjecter cette huile dans le réservoir 40, 400 à partir d'une entrée 66.

La figure 2 est un schéma des différents circuits fermés reliés au réservoir d'huile de l'invention.

En référence à la figure 2, le réservoir d'huile 40 est relié hydrauliquement à un circuit de lubrification et refroidissement 42 du moteur de la turbomachine, il s'agit d'un premier circuit fermé 42 de la turbomachine. Ce circuit comprend un pompe d'alimentation 43, des échangeurs de chaleur 44 et des enceintes de lubrification 45, ces dernières assurent la lubrification des roulements, des réducteurs et des paliers et permettent de garantir l'étanchéité air/huile du moteur.

Le circuit 42 comprend, en outre, au moins une pompe de récupération 46 configurée pour récupérer l'huile des enceintes de lubrification 45 et les diriger vers le réservoir d'huile 40. Le premier circuit fermé 42 peut correspondre à un groupe de lubrification de la turbomachine.

Le réservoir d'huile 40 est également relié hydrauliquement à un circuit 48 d'actionnement du pas des aubes de l'hélice. A cet effet, le circuit 48 permet d'alimenter en huile le premier système à calage variable de l'hélice 14 de la figure 1, il s'agit d'un deuxième circuit fermé 48 de la turbomachine.

Le circuit d'actionnement du pas 48 peut aussi alimenter en huile le deuxième système à calage variable du redresseur 34 de la figure 1, indépendamment ou en combinaison avec le premier système à calage variable.

Le circuit d'actionnement du pas 48 peut assurer des fonctions de lubrification et/ou de refroidissement du système à calage variable. A cet égard, le circuit 48 comprend une pompe de gavage 49 récupérant l'huile d'une partie inférieure du réservoir 40 pour diriger celle-ci vers un échangeur de chaleur 50.

Préférentiellement, le circuit d'actionnement du pas 48 est aussi configuré pour commander hydrauliquement le système à calage variable en plus des fonctions de lubrification et de refroidissement. A cet égard, le circuit 48 comprend une pompe d'actionnement du pas 51 pouvant hydrauliquement commander un système d'actionnement du pas 52, ce dernier peut correspondre au premier et/ou au deuxième système à calage variable de la turbomachine.

Dans cette configuration, la pompe d'actionnement du pas 51 permet d'actionner un actuateur hydraulique entraînant le pivotement des pieds 30 et 38 de la figure 1. Préférentiellement, le circuit d'actionnement du pas 48 comprend une valve de by-pass 53 permettant le choix entre une fonction de refroidissement ou d'actionnement du pas du système à calage variable.

Le circuit 48 comprend un retour d'huile (illustré en pointillés) vers le réservoir 40, 400, ou ledit retour d'huile peut être directement relié en amont de la pompe de gavage 49 sans passer le réservoir 40, 400.

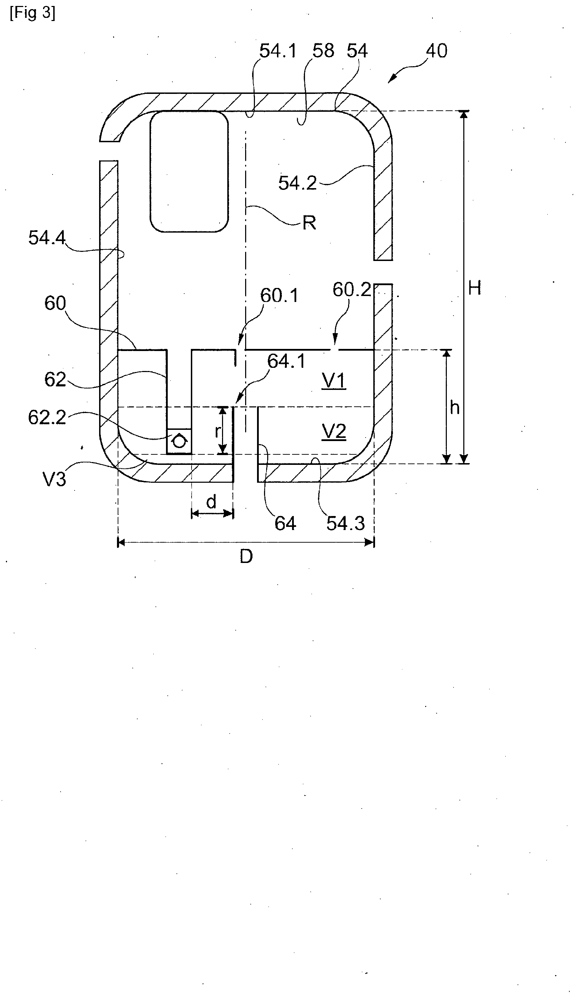

La figure 3 représente une vue en coupe du réservoir d'huile 40.

Le réservoir d'huile 40 comprend une enceinte pour l'huile 54 (huile non représentée ici pour mieux simplifier l'illustration), présentant un axe principal R correspondant à une direction principale R destinée à être orientée préférentiellement verticalement en position de montage dans la turbomachine 2 de la figure 1.

De préférence, l'axe principal R correspond à la direction principale de l'étendue de l'enceinte 54. A cet effet, l'axe principal R définit le sens de la plus grande dimension de ladite enceinte 54.

Préférentiellement , l'axe principal R de l'enceinte 54 suit la direction de la pesanteur (perpendiculaire au plan horizontal). Toutefois, l'axe principal R peut être incliné par rapport à la direction de la pesanteur d'un angle pouvant aller jusqu'à 45° ou dépasser 45° jusqu'à former un angle inférieur à 90° avec ladite direction de la pesanteur.

Suivant le sens de la pesanteur (effort perpendiculaire à l'horizontal et dirigé vers le bas), le compartiment supérieur 58 est au-dessus du compartiment inférieur 56.

Alternativement, l'enceinte 54 du réservoir 40 peut avoir une forme sensiblement oblongue et/ou incurvée. Préférentiellement, l'enceinte 54 comprend une forme sensiblement cylindrique.

L'enceinte 54 présente une hauteur totale H (suivant la direction principale R) entre une paroi inférieure 54.3 et une paroi supérieure 54.1.

Le réservoir 40 comprend une enceinte 54 formée par les 54.1, 54.2, 54.3 et 54.4 délimitant un compartiment inférieur 56 et un compartiment supérieur 58 séparé du compartiment inférieur 56 par une paroi de séparation 60, cette dernière comprend un canal 62 s'étendant dans le compartiment inférieur 56.

L'enceinte 54 peut comprendre un baffle perforé (non illustré) agencé au-dessus de la paroi de séparation 60 et permettant de filtrer et purifier l'huile avant que l'huile atteigne le compartiment inférieur 56.

Dans cette configuration, le conduit 64 s'étend à partir de la paroi inférieure 54.3, cette paroi correspond à un fond 54.3 de l'enceinte 54. Préférentiellement, le conduit 64 est en position centrale par rapport au fond 54.3.

Plus précisément, le compartiment inférieur 56 est défini par les parois latérales 54.2 et 54.4, ainsi que par le fond 54.3 et la paroi de séparation 60 définissant une hauteur h (suivant la direction principale R) du compartiment inférieur 56 avec le fond 54.3.

De préférence, la hauteur h du compartiment inférieur 56 correspond à au plus 50% de la hauteur totale H de l'enceinte 54 du réservoir 40, et ladite hauteur h étant supérieure à au moins 10% de la hauteur totale H.

Suivant la direction principale R, le canal 62 s'étend depuis la paroi de séparation 60 jusqu'à une sortie d'huile 62.1 (correspondant à une extrémité distale du canal 62) préférentiellement sans inversion de sens par rapport à ladite direction principale R.

Préférentiellement, le canal 62 comprend une longueur L égale à au moins 80% de la hauteur h du compartiment inférieur 56. A cet effet, la sortie d'huile 62.1 du canal 62 pouvant être proche du fond 54.3. Avantageusement, cela permet de minimiser la quantité d'huile passant du compartiment inférieur 56 vers le compartiment supérieur 58 lors du passage de l'aéronef du G positif vers le G négatif.

Le conduit 64 s'étend dans le compartiment inférieur 56 et débouche dans ce dernier. A cet effet, le conduit 64 comprend une entrée d'huile 64.1 dans le compartiment inférieur 56.

De préférence, le canal 62 ainsi que le conduit 64 présentent une direction sensiblement rectiligne et préférentiellement parallèle à la direction principale, ou inclinée par rapport à ladite direction principale R d'au plus 20°. Il est préférable que le conduit 64 soit parallèle au canal 62.

Dans cette configuration, la sortie d'huile 62.1 du canal 62 est à une position inférieure à l'entrée d'huile 64.1 du conduit 64, cela permet de conserver une alimentation en huile du conduit 64 lors des phases de vol en pesanteur nulle ou négative. Cette conservation de l'alimentation en huile sera amplement détaillée plus loin dans la présente description.

Le conduit 64 présente un recouvrement r avec le canal 62, ledit recouvrement r étant égal à au plus 50% de la longueur L du canal 62, et au moins 20% de ladite longueur L. Préférentiellement, le recouvrement r est proche de 50% de la longueur L, de manière avantageuse, cela permet maximiser la quantité d'huile pouvant être acheminée à travers le conduit 64.

L'entrée d'huile 64.1 du conduit 64 est latéralement (suivant une perpendiculaire à la direction principale R) distante du canal 64 d'une distance d correspondant à au plus 30% d'une largeur totale D du compartiment inférieur 56 (entre les deux parois 54.2 et 54.4). Avantageusement, la distance d séparant le conduit 64 du canal 62 permet d'accélérer le passage de l'huile de la sortie d'huile 62 vers l'entrée d'huile 64.1.

Préférentiellement, le canal 62 et le conduit 64 sont tous deux proches d'une position centrale du réservoir 40. A cet effet, la distance d peut, par exemple, correspondre à moins de 10% de la largeur totale D du compartiment inférieur 56.

La sortie d'huile 62.1 du canal 62 peut comprendre optionnellement une vanne ou un clapet anti-retour 62.2 sensible aux changements de la pesanteur. En effet, en cas d'une phase de vol de l'aéronef en pesanteur positive (G positif), le clapet anti-retour 62.2 est apte à laisser le passage de l'huile sortant du canal 62, mais en cas d'une phase de vol de l'aéronef en pesanteur nulle ou négative (G0 ou G négatif), le clapet 62.2 ne permet aucun passage d'huile.

Similairement, la paroi de séparation 60 peut comprendre optionnellement au moins une vanne et/ou au moins un clapet 60.1 sensible(nt) aux changements de la pesanteur, ce clapet 60.1 et/ou le clapet anti-retour 62.2 du canal 62 peuvent avantageusement permettre, respectivement, d'accélérer le retour de l'huile dans le compartiment inférieur 56 lors d'une phase transitoire du G négatif vers le G positif, et de limiter la quantité d'huile allant vers le compartiment supérieur 58 lors d'une autre phase transitoire du G positif vers le G négatif.

De préférence, la paroi de séparation 60 comprend au moins un évent 60.2 apte à évacuer l'air pouvant être compris dans le compartiment inférieur 56 lors de la phase transitoire du G négatif vers le G positif. Avantageusement, l'au moins un évent 60.2 permet d'accélérer le retour de l'huile dans le compartiment inférieur 56.

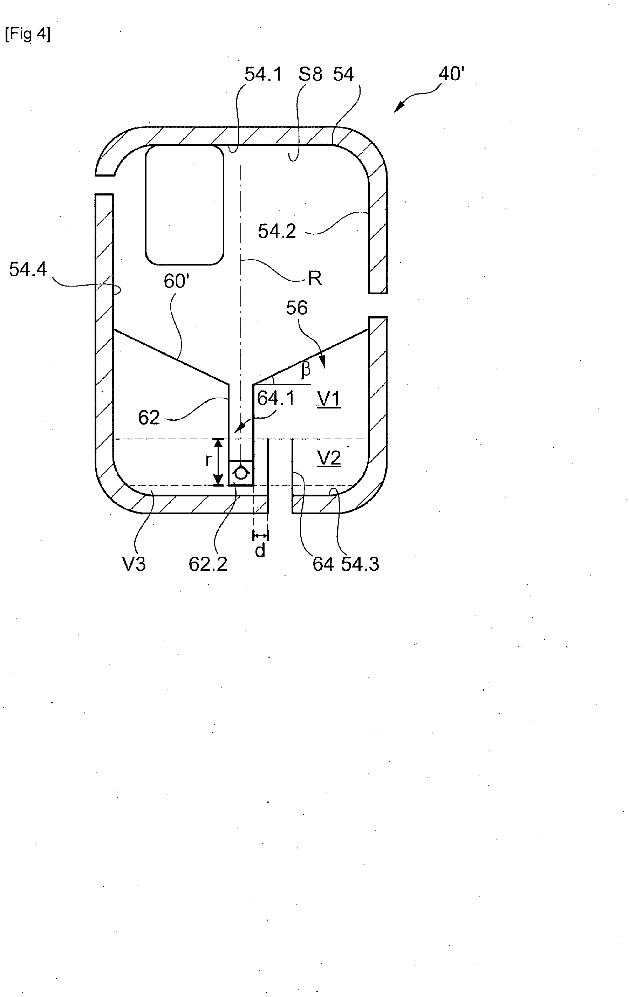

La figure 4 illustre une variante du réservoir 40 de la figure 3, le réservoir 40' illustré comprend une paroi de séparation 60' qui présente une forme conique.

Préférentiellement, la paroi de séparation 60' est de préférence inclinée par rapport à une perpendiculaire à la direction principale R d'un angle d'inclinaison β compris entre 10° et 60°, plus préférentiellement compris entre 30° et 50°, et encore plus préférentiellement, l'angle d'inclinaison β est égal à 45°. A cet effet, la paroi de séparation 60' est en forme d'entonnoir.

Le canal 62 est de préférence dans une position centrale à l'intérieur du compartiment inférieur 56. Dans cette configuration, le conduit 64 est de préférence proche du canal 62.

Avantageusement, la forme conique de la paroi de séparation 60' ainsi que la position centrale du canal 62 permet de et faciliter la circulation d'huile vers le canal 62 lors d'un retour en gravité positive après un évènement en gravité négative.

Dans une alternative non représentée, le compartiment inférieur peut être disposé extérieurement à l'enceinte de manière à pouvoir intégrer le réservoir dans un environnement particulièrement contraignant de la turbomachine. A cet égard, la paroi inférieure de l'enceinte peut correspondre au fond du compartiment supérieur, et le compartiment inférieur correspondra à un deuxième réservoir tampon.

La liaison fluidique entre le compartiment supérieur et le compartiment inférieur peut être assurée au moyen d'un ou de plusieurs canalisations hydrauliques qui peuvent être flexibles et/ou être confondus avec le canal du compartiment inférieur.

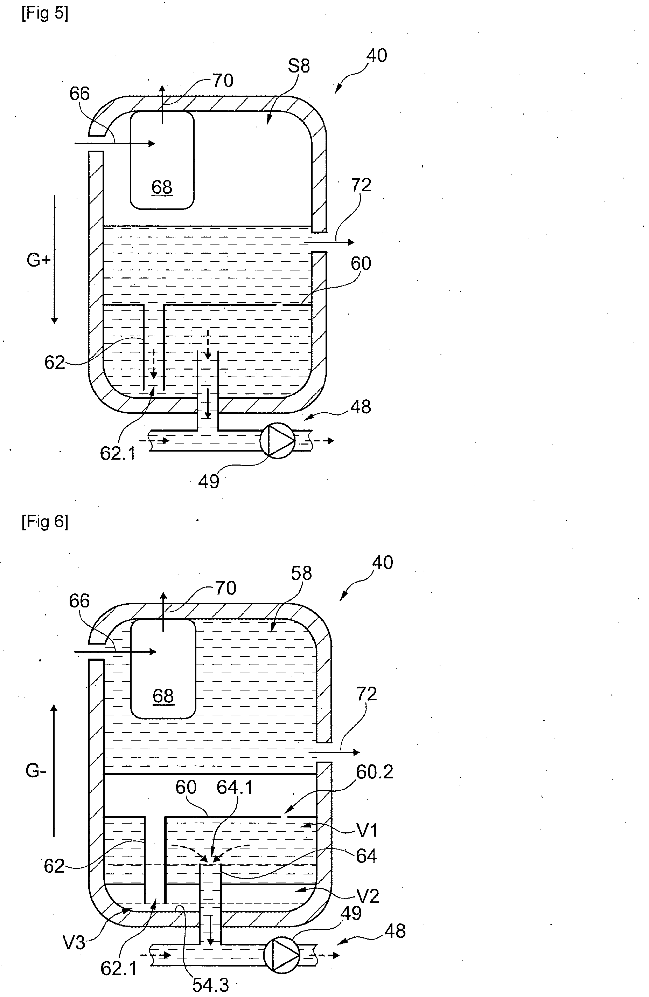

La figure 5 représente une vue en coupe du réservoir d'huile 40 de la figure 3 lors d'une phase de vol de l'aéronef en G positif. A présent, G+ fera référence à une pesanteur positive et G- à une pesanteur négative.

Il est à noter que le réservoir 40 est apte à assurer une alimentation constante en huile pure lors de phases de vol en G-, et chacune des phases en G- dure entre une fraction de seconde et 45 secondes. Avantageusement, le réservoir 40 peut être dimensionné de manière à assurer une alimentation constante en huile même au-delà des 45 secondes..

A cet égard, le réservoir d'huile 40 comprend, une arrivée d'huile 66 mélangée à de l'air, disposée sur le compartiment supérieur 58, et précisément vers un dispositif désaérateur d'huile 68, permettant d'évacuer l'air 70 pouvant être mélangé avec l'huile. L'arrivée d'huile provient de préférence de l'au moins une pompe de récupération 46 de la figure 2.

Le réservoir 40 comprend en outre une sortie d'huile supérieure 72 formant avec l'arrivée d'huile 66 et le compartiment supérieur 58 le premier circuit fermé 42 de la figure 2.

Le réservoir 40 comprend également un départ d'huile 74 comprenant le conduit 64. Dans cette configuration, l'huile contenue dans le compartiment supérieur 58 passe au compartiment inférieur 56 avant d'entrer dans le conduit 64 pour être ensuite acheminée vers le deuxième circuit fermé 48 (dont une portion étant partiellement illustrée). A cet effet, la pompe de gavage 49 aspire l'huile de façon continue, les flèches en pointillés illustrent les mouvements de l'huile.

La figure 6 représente une vue en coupe du réservoir d'huile 40 de la figure 3 lors d'une phase de vol de l'aéronef en G négatif G-.

Le compartiment inférieur 56 délimite un premier volume d'huile V1 entre la sortie d'huile 62.1 du canal 62 et la paroi de séparation 60, et un deuxième volume V2 d'huile entre l'entrée d'huile 64.1 du conduit 64 et un départ d'huile 74 (correspondant à une sortie de l'huile du compartiment inférieur 56 pour alimenter le deuxième circuit fermé 48), le départ d'huile 74 est sensiblement au même niveau que le fond 54.3.

Lors d'un début de l'événement G-, un volume V3 d'huile passe du compartiment inférieur 56 vers le compartiment supérieur 58. A cet effet, il est préférable que la sortie d'huile 62.1 soit proche du fond 54.3 de manière à minimiser le volume V3.

Dans cette configuration, le deuxième volume V2 est plus petit que le premier volume V1 à l'intérieur du compartiment inférieur 56. En effet, le deuxième volume V2 correspond ici à un volume tampon utile V2 permettant à la pompe de gavage 49 d'aspirer directement l'huile contenue dans ledit volume V2 dès le passage du G+ au G-. Cela permet d'assurer une alimentation du deuxième circuit fermé 48 sans interruption. En effet, le premier volume V1 correspond au volume d'huile requis pour assurer l'alimentation du circuit 48 dès le retour en G+ après l'évènement G-.

Préférentiellement, le deuxième volume V2 correspond au plus à une moitié du volume total du compartiment inférieur (V1 + V2 + V3). Cela est assuré par le recouvrement r d'au plus 50% du la longueur du canal 62. Toutefois, le recouvrement r pourrait dépendre de la forme du compartiment inférieur 56, en effet, si ce dernier présente une forme complexe induisant, par exemple, un rétrécissement du volume V1 (réduction locale de la largeur D), alors le recouvrement r peut correspondre à 70% de la longueur du canal 62 de manière à toujours assurer un volume V2 égal au plus à 50% du volume total. Et inversement, en cas d'élargissement du volume V1, alors le recouvrement r peut, par exemple, correspondre à 30% de la longueur du canal 62.

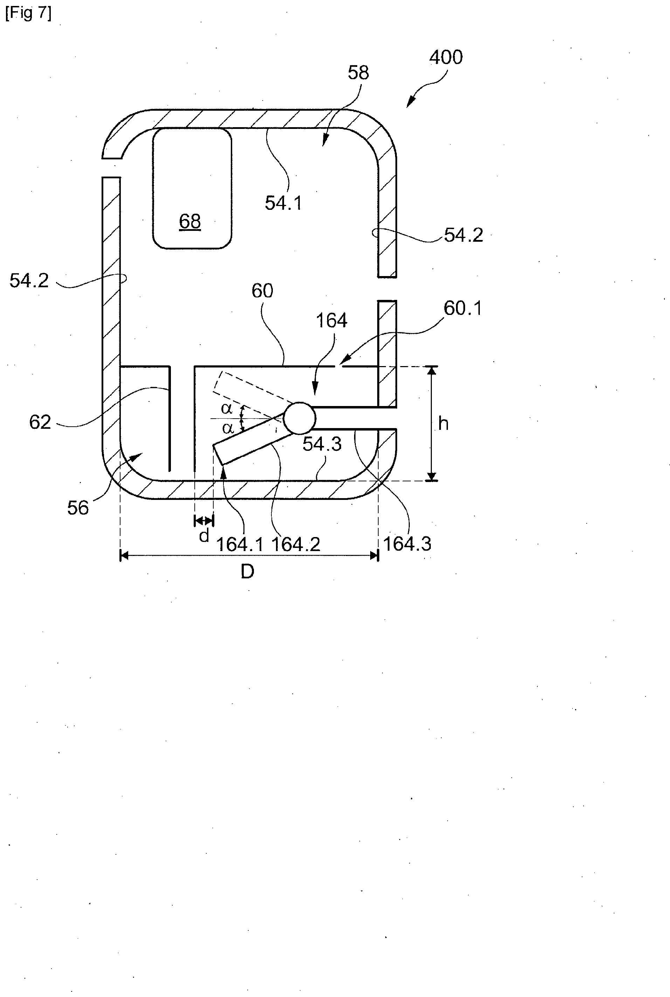

La figure 7 représente une vue en coupe d'un réservoir d'huile 400 selon un deuxième mode de réalisation de l'invention. Le deuxième mode de réalisation est différent du premier mode de réalisation, cette différence concerne au moins le conduit et son agencement dans le compartiment inférieur.

Les éléments identiques à ceux du premier mode de réalisation sont représentés par les mêmes références numériques, et ceux présentant une différence seront représenté avec une incrémentation de 100.

En référence à la figure 7, le réservoir 400 comprend un conduit 164 agencé au droit de paroi latérale 54.2 du compartiment inférieur 56, mais peut également être agencé dans l'autre paroi latérale 54.4.

Le conduit 164 est coudé et comprenant une partie distale 164.2 apte à se déplacer dans le compartiment inférieur 56 entre une première position dans laquelle l'entrée d'huile 164.1 de la partie distale 164.2 étant proche du fond 54.3, et une deuxième position (illustrée en pointillés) dans laquelle l'entrée d'huile 164.1 est proche de la paroi de séparation 60.

La partie distale 164.2 du conduit coudé 164 est sensible aux changements de la pesanteur. En effet, c'est cette sensibilité à la pesanteur qui permet à la partie distale 164.2 d'atteindre la première position en cas de G+ et d'atteindre la deuxième position en cas de G-.

A cet égard, la partie distale 164.2 peut être reliée à une partie proximale 164.3, étant sensiblement perpendiculaire à la direction principale R, au moyen d'un élément permettant la rotation, telle qu'une rotule par exemple. Préférentiellement, la partie distale 164.2 correspond à un tube métallique annelé et apte à se plier en fonction de la pesanteur.

Préférentiellement, le conduit 164 est disposé à environ 50% (±10%) de la hauteur h du compartiment inférieur 56. Cela permet de garantir une symétrie d'inclinaison de la partie distale 164.2 par rapport à la verticale à la direction principale (illustrée par l'angle d'inclinaison α dans la figure 7). De préférence, l'angle d'inclinaison α est supérieur à 10° et peut aller jusqu'à 90°, et préférentiellement, l'angle α est compris entre 20° et 70°, et plus préférentiellement, l'angle α est égal à environ 45°.

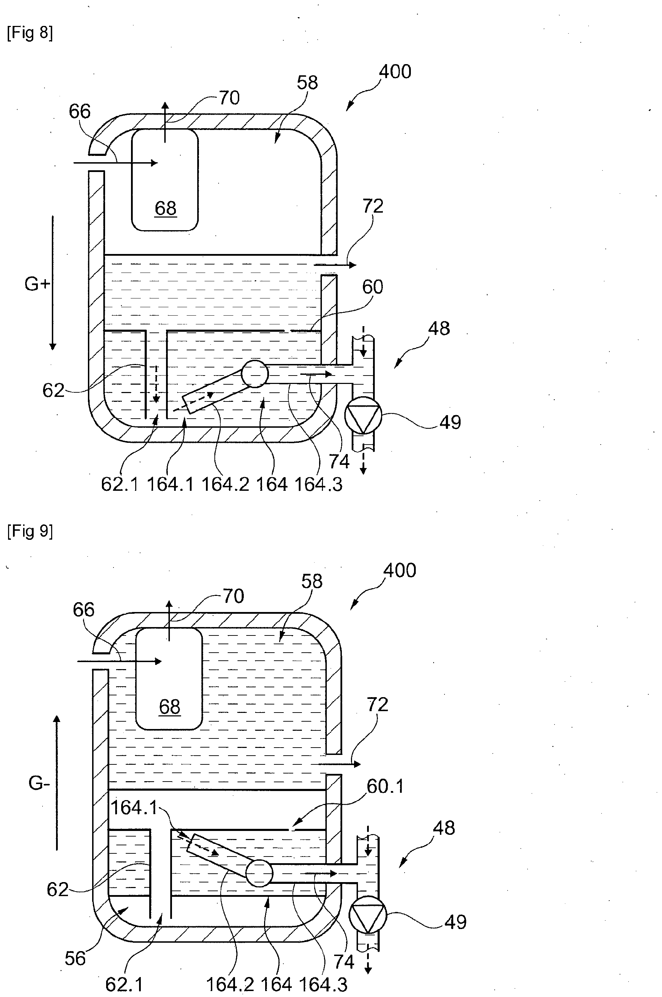

La figure 8 représente une vue en coupe du réservoir d'huile 400 de la figure 7 lors d'une phase de vol de l'aéronef en G+. Ici la partie distale 164.2 est dans la première position.

Dans cette configuration, la pompe de gavage 49 est apte à aspirer l'huile présente dans le fond 54.3 du réservoir 400.

La figure 9 représente une vue en coupe du réservoir d'huile 400 de la figure 7 lors d'une phase de vol de l'aéronef en G-. Ici la partie distale 164.2 est dans la deuxième position.

Dans cette configuration, la pompe de gavage 49 est apte à aspirer l'huile présente dans proche de la paroi de séparation 60. Avantageusement, le volume tampon utile pouvant être aspiré en G- est maximisé grâce à la capacité de la partie distale 164.2 à se déplacer en fonction de la pesanteur. Le volume tampon utile en G- est sensiblement délimité par la sortie d'huile 62.1 du canal 62 et par la paroi de séparation 60.

De manière avantageuse, la turbomachine de la présente invention est capable d'assurer un fonctionnement continu et sécurisé de ses systèmes à calage variable grâce au réservoir principal d'huile permettant d'assurer un gavage en huile afin d'alimenter de tels systèmes en huile pure sans aucune présence d'air et sans interruption d'alimentation lors des phases de vol en pesanteur nulle ou négative.

Dans une variante non représentée, le réservoir d'huile de la turbomachine, peut combiner dans le compartiment inférieur, à la fois le conduit 64 selon le premier mode de réalisation, et le conduit 164 selon le deuxième mode de réalisation. Cette combinaison des deux modes de réalisation permet d'augmenter le débit d'huile aspirée par la pompe de gavage.

## Revendications

1. Réservoir d'huile (40 ;400) pour turbomachine (2), comprenant :
- une enceinte (54) pour l'huile, présentant un axe principal (R), et avec des parois (54.1, 54.2, 54.3, 54.4) délimitant un compartiment inférieur (56) et un compartiment supérieur (58) séparé du compartiment inférieur (56) par une paroi de séparation (60 ; 60') ;
- un canal (62) s'étendant dans le compartiment inférieur (56), depuis la paroi de séparation (60), ledit canal comprenant une sortie d'huile (62.1) débouchant dans le compartiment inférieur (56) ;
- une arrivée d'huile (66) mélangée à de l'air, disposée sur le compartiment supérieur (58) ;
- un départ d'huile (74) depuis le compartiment inférieur (56), comprenant un conduit (64 ;164) s'étendant dans le compartiment inférieur (56) et comprenant une entrée d'huile (64.1 ; 164.1) dans le compartiment inférieur (56) ;
**caractérisé en ce que** la paroi de séparation (60') présente une forme conique, et la sortie d'huile (62.1) du canal (62) est davantage éloignée du compartiment supérieur (58) comparé à l'entrée d'huile (64.1) du conduit (64), suivant l'axe principal (R), de manière à conserver une alimentation en huile du conduit (64) lors des phases de vol en pesanteur nulle ou négative.

2. Réservoir d'huile (40 ; 400), selon la revendication 1, dans lequel le canal (62) s'étend depuis la paroi de séparation (60) jusqu'à la sortie d'huile (62.1) suivant l'axe principal (R) sans inversion de sens par rapport audit axe principal (R).

3. Réservoir d'huile (40 ; 400), selon l'une des revendications 1 et 2, dans lequel le départ d'huile (74) et le conduit (64) sont sur une des parois (54.2 ; 54.3) de l'enceinte (54) formant le compartiment inférieur (56).

4. Réservoir d'huile (40), selon la revendication 3, dans lequel la paroi de l'enceinte (54) est une paroi inférieure (54.3), le conduit (64) et le canal (62) s'étendant suivant l'axe principal (R) ou avec une inclinaison avec ledit axe principal (R) inférieure à 20°.

5. Réservoir d'huile (40), selon l'une des revendications 1 à 4, dans lequel le compartiment inférieur (56) délimite, suivant l'axe principal (R), un premier volume d'huile (V1) entre la sortie d'huile (62.1) du canal (62) et la paroi de séparation (60), et un deuxième volume (V2) d'huile entre l'entrée d'huile (64.1) du conduit (64) et le départ d'huile (74), ledit deuxième volume (V2) étant plus petit que le premier volume (V1).

6. Réservoir d'huile (40) selon l'une des revendications 1 à 5, dans lequel la paroi de séparation (60) définit une hauteur (h) avec la paroi inférieure (54.3), et le canal (62) comprend une longueur (L) égale à au moins 80% de la hauteur (h) du compartiment inférieur (56).

7. Réservoir d'huile (40 ; 400) selon l'une des revendications 1 à 6, dans lequel le conduit (64) présente un recouvrement (r) avec le canal (62), ledit recouvrement (r) étant égal à au plus 50% de la longueur (L) du canal (62).

8. Réservoir d'huile (40 ; 400) selon l'une des revendications 1 à 7, dans lequel la paroi de séparation (60) et/ou la sortie d'huile (62.1) du canal (62) comprend, en outre, au moins une vanne (60.1) et/ou au moins un clapet anti-retour (62.2) sensible(nt) aux changements de la pesanteur.

9. Réservoir d'huile (400) pour turbomachine (2), comprenant :
- une enceinte (54) pour l'huile, présentant un axe principal (R), et avec des parois (54.1, 54.2, 54.3, 54.4) délimitant un compartiment inférieur (56) et un compartiment supérieur (58) séparé du compartiment inférieur (56) par une paroi de séparation (60) ;
- un canal (62) s'étendant dans le compartiment inférieur (56), depuis la paroi de séparation (60), ledit canal comprenant une sortie d'huile (62.1) débouchant dans le compartiment inférieur (56) ;
- une arrivée d'huile (66) mélangée à de l'air, disposée sur le compartiment supérieur (58) ;
- un départ d'huile (74) depuis le compartiment inférieur (56), comprenant un conduit (64 ;164) s'étendant dans le compartiment inférieur (56) et comprenant une entrée d'huile (64.1 ; 164.1) dans le compartiment inférieur (56) ;
**caractérisé en ce que** la sortie d'huile (62.1) du canal (62) est davantage éloignée du compartiment supérieur (58) comparé à l'entrée d'huile (64.1) du conduit (64), suivant l'axe principal (R), de manière à conserver une alimentation en huile du conduit (64) lors des phases de vol en pesanteur nulle ou négative, et **en ce que** le conduit (164) est agencé au droit d'une paroi latérale (54.3) du compartiment inférieur (56), ledit conduit (164) étant coudé et comprenant une partie distale (164.2) apte à se déplacer dans le compartiment inférieur (56) entre une première position dans laquelle l'entrée d'huile (164.1) de la partie distale (164.2) étant proche de la paroi inférieure (54.3), et une deuxième position dans laquelle l'entrée d'huile (164.1) est proche de la paroi de séparation (60).

10. Réservoir d'huile (400) selon la revendication 9, dans lequel la partie distale (164.2) du conduit coudé (164) est sensible aux changements de la pesanteur.

11. Réservoir d'huile (40 ; 400) selon l'une des revendication 1 à 10, dans lequel l'entrée d'huile (64.1 ; 164.1) du conduit (64 ; 164) est latéralement distante du canal (62 ; 162) d'une distance (d) correspondant à au plus 30% d'une largeur totale (D) du compartiment inférieur (56).

12. Turbomachine (2) comprenant :
- une hélice (14) non carénée propulsant un flux d'air entrant (F), ladite hélice (14) comprenant un système à calage variable (52) permettant d'actionner le pas des aubes (28) de l'hélice (14) ;
- un réservoir d'huile (40 ; 400) pour la lubrification de composants de la turbomachine (2) ; **caractérisé en ce que** ledit réservoir (40 ; 400) est selon l'une des revendications 1 à 11.

13. Turbomachine (2) selon la revendication 12, **caractérisée en ce que** l'arrivée d'huile (66) vers le compartiment supérieur (58) et une sortie d'huile supérieure (72) forment avec le compartiment supérieur (58) un premier circuit fermé (42) destiné à la lubrification et/ou au refroidissement des composants du moteur (3) de la turbomachine (2).

14. Turbomachine (2) selon l'une des revendications 12 ou 13, **caractérisée en ce que** le système à calage variable (52) est un premier système à calage variable (52), et ladite turbomachine (2) comprend, en outre, un redresseur (34) comprenant une pluralité d'aubes statoriques (36) s'étendant depuis un carter fixe (24), ledit redresseur (34) comprenant un deuxième système à calage variable (52), et **en ce que** le départ d'huile (74) est hydrauliquement relié à un deuxième circuit fermé (48) comprenant des composants du premier système (52) et/ou du deuxième système à calage variable (52) de la turbomachine (2).

## Patentansprüche

1. Öltank (40; 400) für Turbomaschine (2), umfassend:
- ein Gehäuse (54) für das Öl, mit einer Hauptachse (R) und mit Wänden (54.1, 54.2, 54.3, 54.4), die ein unteres Fach (56) und ein oberes Fach (58) begrenzen, wobei durch eine Trennwand (60; 60') das untere Fach (56) vom oberen Fach (58) getrennt ist;
- einen Kanal (62), der sich im unteren Fach (56) von der Trennwand (60) erstreckt, wobei der Kanal einen Ölauslass (62.1) umfasst, der in das untere Fach (56) mündet;
- einen Öleintritt (66), der mit Luft gemischt ist und sich im oberen Fach (58) befindet;
- einen Ölausgang (74) aus dem unteren Fach (56), umfassend eine Leitung (64; 164), die sich im unteren Fach (56) erstreckt und einen Öleintritt (64.1; 164.1) im unteren Fach (56) umfasst;
**dadurch gekennzeichnet, dass** die Trennwand (60') eine konische Form aufweist und der Ölauslass (62.1) des Kanals (62) weiter vom oberen Fach (58) entfernt ist im Vergleich zum Öleintritt (64.1) der Leitung (64) entlang der Hauptachse (R), um die Ölversorgung der Leitung (64) während der Phasen des Fluges in null oder negativer Schwerkraft beizubehalten.

2. Öltank (40; 400) nach Anspruch 1, wobei der Kanal (62) sich von der Trennwand (60) bis zum Ölauslass (62.1) entlang der Hauptachse (R) ohne Umkehrung der Richtung im Verhältnis zur Hauptachse (R) erstreckt.

3. Öltank (40; 400) nach einem der Ansprüche 1 und 2, wobei der Ölausgang (74) und die Leitung (64) an einer der Wände (54.2; 54.3) des Gehäuses (54) sind, die das untere Fach (56) bildet.

4. Öltank (40) nach Anspruch 3, wobei die Wand des Gehäuses (54) eine untere Wand (54.3) ist, die Leitung (64) und der Kanal (62) sich entlang der Hauptachse (R) oder mit einer Neigung von weniger als 20° zu dieser Hauptachse (R) erstrecken.

5. Öltank (40) nach einem der Ansprüche 1 bis 4, wobei das untere Fach (56) entlang der Hauptachse (R) ein erstes Ölfachvolumen (V1) zwischen dem Ölauslass (62.1) des Kanals (62) und der Trennwand (60) und ein zweites Ölvolumen (V2) zwischen dem Öleintritt (64.1) der Leitung (64) und dem Ölausgang (74) begrenzt, wobei das zweite Ölvolumen (V2) kleiner ist als das erste Ölfachvolumen (V1).

6. Öltank (40) nach einem der Ansprüche 1 bis 5, wobei die Trennwand (60) eine Höhe (h) mit der unteren Wand (54.3) definiert und der Kanal (62) eine Länge (L) umfasst, die mindestens 80 % der Höhe (h) des unteren Fachs (56) entspricht.

7. Öltank (40; 400) nach einem der Ansprüche 1 bis 6, wobei die Leitung (64) eine Überlappung (r) mit dem Kanal (62) aufweist, wobei die Überlappung (r) höchstens 50 % der Länge (L) des Kanals (62) beträgt.

8. Öltank (40; 400) nach einem der Ansprüche 1 bis 7, wobei die Trennwand (60) und/oder die Ölauslass (62.1) des Kanals (62) mindestens ein Ventil (60.1) und/oder mindestens ein Rückschlagventil (62.2) umfasst, das/die empfindlich auf Änderungen der Schwerkraft reagiert/reagieren.

9. Öltank (400) für Turbomaschine (2), umfassend:
- ein Gehäuse (54) für das Öl, mit einer Hauptachse (R) und mit Wänden (54.1, 54.2, 54.3, 54.4), die ein unteres Fach (56) und ein oberes Fach (58) begrenzen, wobei durch eine Trennwand (60) das untere Fach (56) vom oberen Fach (58) getrennt ist;
- einen Kanal (62), der sich im unteren Fach (56) von der Trennwand (60) erstreckt, wobei der Kanal einen Ölauslass (62.1) umfasst, der in das untere Fach (56) mündet;
- einen Öleintritt (66), der mit Luft gemischt ist und sich im oberen Fach (58) befindet;
- einen Ölausgang (74) aus dem unteren Fach (56), umfassend eine Leitung (64; 164), die sich im unteren Fach (56) erstreckt und einen Öleintritt (64.1; 164.1) im unteren Fach (56) umfasst;
**dadurch gekennzeichnet, dass** der Ölauslass (62.1) des Kanals (62) weiter vom oberen Fach (58) entfernt ist im Vergleich zum Öleintritt (64.1) der Leitung (64) entlang der Hauptachse (R), um die Ölversorgung der Leitung (64) während der Phasen des Fluges in null oder negativer Schwerkraft beizubehalten, und dass die Leitung (164) an einer Seitenwand (54.3) des unteren Fachs (56) angeordnet ist, wobei die Leitung (164) gekrümmt ist und einen distalen Teil (164.2) umfasst, der sich im unteren Fach (56) zwischen einer ersten Position, in der der Öleintritt (164.1) des distalen Teils (164.2) nahe der unteren Wand (54.3) ist, und einer zweiten Position, in der der Öleintritt (164.1) nahe der Trennwand (60) ist, bewegen kann.

10. Öltank (400) nach Anspruch 9, wobei der distale Teil (164.2) der gekrümmten Leitung (164) empfindlich auf Änderungen der Schwerkraft reagiert.

11. Öltank (40; 400) nach einem der Ansprüche 1 bis 10, wobei der Öleintritt (64.1; 164.1) der Leitung (64; 164) seitlich vom Kanal (62; 162) mit einem Abstand (d) von höchstens 30 % der Gesamtbreite (D) des unteren Fachs (56) entfernt ist.

12. Turbomaschine (2) umfassend:
- eine nicht verkleidete Luftschraube (14), die einen einströmenden Luftstrom (F) antreibt, wobei die Luftschraube (14) ein variables Pitchsystem (52) umfasst, das den Luftschraubenblättern (28) der Luftschraube (14) ermöglicht, eingestellt zu werden;
- einen Öltank (40; 400) zur Schmierung von Komponenten der Turbomaschine (2); **dadurch gekennzeichnet, dass** der genannte Öltank (40; 400) gemäß einer der Ansprüche 1 bis 11 ist.

13. Turbomaschine (2) nach Anspruch 12, **dadurch gekennzeichnet, dass** die Ölzufuhr (66) zum oberen Fach (58) und ein oberer Ölausgang (72) zusammen mit dem oberen Fach (58) einen geschlossenen ersten Kreislauf (42) bilden, der zur Schmierung und/oder Kühlung der Komponenten des Motors (3) der Turbomaschine (2) vorgesehen ist.

14. Turbomaschine (2) nach einem der Ansprüche 12 oder 13, **dadurch gekennzeichnet, dass** das variable Pitchsystem (52) ein erstes variables Pitchsystem (52) ist, und dass die genannte Turbomaschine (2) darüber hinaus einen Leitapparat (34) umfasst, der eine Vielzahl von Statoren (36) umfasst, die sich von einem festen Gehäuse (24) erstrecken, wobei der genannte Leitapparat (34) ein zweites variables Pitchsystem (52) umfasst, und dass der Ölausgang (74) hydraulisch mit einem zweiten geschlossenen Kreislauf (48) verbunden ist, der Komponenten des ersten Systems (52) und/oder des zweiten variablen Pitchsystems (52) der Turbomaschine (2) umfasst.

## Claims

1. Oil reservoir (40; 400) for turbomachine (2), comprising:
- an enclosure (54) for the oil, having a main axis (R), and with walls (54.1, 54.2, 54.3, 54.4) delimiting a lower compartment (56) and an upper compartment (58) separated from the lower compartment (56) by a separating wall (60; 60');
- a channel (62) extending into the lower compartment (56) from the separating wall (60), said channel comprising an oil outlet (62.1) opening into the lower compartment (56);
- an oil inlet (66) for oil mixed with air disposed in the upper compartment (58);
- an oil departure (74) from the lower compartment (56), comprising a conduit (64; 164) extending into the lower compartment (56) and comprising an oil inlet (64.1; 164.1) in the lower compartment (56);
**characterized in that** the separating wall (60') has a conical shape, and the oil outlet (62.1) of the channel (62) is more distant from the upper compartment (58) compared to the oil inlet (64.1) of the conduit (64), along the main axis (R), in such a way as to maintain an oil supply to the conduit (64) during zero or negative gravity flight phases.

2. The oil reservoir (40; 400) according to claim 1, in which the channel (62) extends from the separating wall (60) to the oil outlet (62.1) along the main axis (R) without reversal of direction relative to said main axis (R).

3. The oil reservoir (40; 400) according to one of claims 1 and 2, in which the oil departure (74) and the conduit (64) are on one of the walls (54.2; 54.3) of the enclosure (54) forming the lower compartment (56).

4. The oil reservoir (40) according to claim 3, in which the wall of the enclosure (54) is a lower wall (54.3), the conduit (64) and the channel (62) extending along the main axis (R) or with an inclination relative to said main axis (R) less than 20°.

5. The oil reservoir (40) according to one of claims 1 to 4, in which the lower compartment (56) delimits, along the main axis (R), a first oil volume (V1) between the oil outlet (62.1) of the channel (62) and the separating wall (60), and a second oil volume (V2) between the oil inlet (64.1) of the conduit (64) and the oil departure (74), said second volume (V2) being smaller than the first volume (V1).

6. The oil reservoir (40) according to one of claims 1 to 5, in which the separating wall (60) defines a height (h) with the lower wall (54.3), and the channel (62) comprises a length (L) equal to at least 80% of the height (h) of the lower compartment (56).

7. The oil reservoir (40; 400) according to one of claims 1 to 6, in which the conduit (64) features an overlap (r) with the channel (62), said overlap (r) being equal to at most 50% of the length (L) of the channel (62).

8. The oil reservoir (40; 400) according to one of claims 1 to 7, in which the separating wall (60) and/or the oil outlet (62.1) of the channel (62) comprises additionally at least one valve (60.1) and/or at least one check valve (62.2) sensitive to changes in gravity.

9. The oil reservoir (400) for turbomachine (2), comprising:
- an enclosure (54) for the oil, having a main axis (R), and with walls (54.1, 54.2, 54.3, 54.4) delimiting a lower compartment (56) and an upper compartment (58) separated from the lower compartment (56) by a separating wall (60);
- a channel (62) extending into the lower compartment (56) from the separating wall (60), said channel comprising an oil outlet (62.1) opening into the lower compartment (56);
- an oil inlet (66) mixed with air disposed in the upper compartment (58);
- an oil departure (74) from the lower compartment (56), comprising a conduit (64; 164) extending into the lower compartment (56) and comprising an oil inlet (64.1; 164.1) in the lower compartment (56);
**characterized in that** the oil outlet (62.1) of the channel (62) is more distant from the upper compartment (58) compared to the oil inlet (64.1) of the conduit (64), along the main axis (R), in such a way as to maintain an oil supply to the conduit (64) during zero or negative gravity flight phases, and **in that** the conduit (164) is arranged at a lateral wall (54.3) of the lower compartment (56), said conduit (164) being elbowed and comprising a distal part (164.2) able to move in the lower compartment (56) between a first position in which the oil inlet (164.1) of the distal part (164.2) is near the lower wall (54.3), and a second position in which the oil inlet (164.1) is near the separating wall (60).

10. The oil reservoir (400) according to claim 9, in which the distal part (164.2) of the elbowed conduit (164) is sensitive to changes in gravity.

11. The oil reservoir (40; 400) according to one of claims 1 to 10, in which the oil inlet (64.1; 164.1) of the conduit (64; 164) is laterally distant from the channel (62; 162) by a distance (d) corresponding to at most 30% of a total width (D) of the lower compartment (56).

12. Turbomachine (2) comprising:
- an unshrouded propeller (14) driving an incoming airflow (F), said propeller (14) comprising a variable pitch system (52) for actuating the pitch of the blades (28) of the propeller (14);
- an oil reservoir (40; 400) for the lubrication of components of the turbomachine (2); **characterized in that** said reservoir (40; 400) is according to one of claims 1 to 11.

13. The turbomachine (2) according to claim 12, **characterized in that** the oil inlet (66) into the upper compartment (58) and a top oil outlet (72) form with the upper compartment (58) a first closed circuit (42) intended for the lubrication and/or cooling of the engine (3) components of the turbomachine (2).

14. The turbomachine (2) according to one of claims 12 or 13, **characterized in that** the variable pitch system (52) is a first variable pitch system (52), and said turbomachine (2) further comprises a straightener (34) comprising a plurality of stator blades (36) extending from a fixed casing (24), said straightener (34) comprising a second variable pitch system (52), and **in that** the oil departure (74) is hydraulically connected to a second closed circuit (48) comprising components of the first system (52) and/or the second variable pitch system (52) of the turbomachine (2).
